(19) Europäisches Patentamt
European Patent Office
Office européen des brevets

(11) **EP 3 714 078 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(21) Anmeldenummer: **18812083.6**

(22) Anmeldetag: **20.11.2018**

(51) Int Cl.:
*C22C 21/00* (2006.01)        *B22D 11/06* (2006.01)
*H01M 4/66* (2006.01)

(86) Internationale Anmeldenummer:
**PCT/EP2018/081900**

(87) Internationale Veröffentlichungsnummer:
**WO 2019/101730 (31.05.2019 Gazette 2019/22)**

(54) **HOCHFESTE BATTERIEELEKTRODENFOLIE FÜR DIE HERSTELLUNG VON LITHIUM-IONEN-AKKUMULATOREN**

HIGH-STRENGTH BATTERY ELECTRODE FOIL FOR THE PRODUCTION OF LITHIUM-ION ACCUMULATORS

FEUILLE D'ÉLECTRODE DE BATTERIE À HAUTE RÉSISTANCE POUR LA FABRICATION D'ACCUMULATEURS LITHIUM-ION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2017 DE 102017127441**

(43) Veröffentlichungstag der Anmeldung:
**30.09.2020 Patentblatt 2020/40**

(73) Patentinhaber: **Speira GmbH**
**41515 Grevenbroich (DE)**

(72) Erfinder:
• **LAPTYEVA, Galyna**
**53347 Alfter (DE)**
• **HAMPEL, Ulrich**
**41516 Grevenbroich (DE)**
• **DENKMANN, Volker**
**47906 Kempen (DE)**

(74) Vertreter: **Bühler, Dirk**
**Maiwald Patentanwalts- und Rechtsanwaltsgesellschaft mbH**
**Elisenhof**
**Elisenstraße 3**
**80335 München (DE)**

(56) Entgegenhaltungen:
CN-A- 103 436 746    CN-A- 105 063 520
CN-A- 106 929 713    CN-A- 107 099 701
CN-B- 104 611 616

**Beschreibung**

**GEBIET DER ERFINDUNG**

Die Erfindung betrifft eine Batterieelektrodenfolie umfassend eine Aluminiumlegierung, wobei die Aluminiumlegierung die folgende Zusammensetzung in Gew.-% aufweist: Si: 0,07 - 0,12 Gew.-%, Fe: 0,18 - 0,24 Gew.-%, Cu: 0,03 - 0,08 Gew.-%, Mn: 0,015 - 0,025 Gew.-%, Zn: $\leq$ 0,01 Gew.-%, Ti: 0,015 - 0,025 Gew.-%, wobei die Aluminiumlegierung Verunreinigungen jeweils bis maximal 0,01 %, insgesamt bis maximal 0,03 % aufweisen kann, wobei der Anteil an Aluminium jedoch mindestens 99,5 Gew.-% sein muss; wobei die Batterieelektrodenfolie intermetallische Phasen einer Durchmesserlänge von 0,1 bis 1,0 $\mu$m mit einer Dichte $\leq$ 9500 Partikeln/mm$^2$ aufweist. Die Erfindung betrifft außerdem ein Verfahren zur Herstellung einer Batterieelektrodenfolie, ihre Verwendung zur Herstellung von Akkumulatoren, sowie Akkumulatoren, enthaltend die Batterieelektrodenfolie.

**TECHNOLOGISCHER HINTERGRUND**

Lithium-Ionen-Akkumulatoren bestehen im Kern aus abwechselnd übereinander angeordneten Anoden- und Kathodenschichten, die durch Separatorschichten voneinander getrennt sind. Für die Kathodenschichten wird typischerweise mit Li-haltiger Elektrodenpaste beschichtete Aluminiumfolie verwendet. Bei der Anodenschicht kann es sich zum Beispiel um mit Graphit beschichtete Kupferfolie und bei der Separatorschicht um eine für Li-Ionen durchlässige Polymerschicht handeln.

Die Aluminiumfolie dient bei der Kathodenschicht einerseits als Träger bzw. Substrat für die Elektrodenpaste und andererseits zur Ableitung des Stroms, d.h. als sogenannter Stromableiter.

Im Stand der Technik werden als Stromableiter für Lithium-Ionen-Akkumulatoren typischerweise Aluminiumfolien aus reinen Aluminiumwerkstoffen, wie z. B. EN AW1085 verwendet, da diese gegenüber höher legierten Werkstoffen eine bessere Leitfähigkeit aufweisen. Allerdings haben die reinen Aluminiumwerkstoffe naturgemäß ungünstige mechanische Eigenschaften, was sich nachteilig auf die Prozessierbarkeit und/oder die Lebensdauer des Lithium-Ionen-Akkumulators auswirken kann.

Bei der Herstellung der Kathodenschicht wird die Elektrodenpaste auf die Aluminiumfolie aufgebracht und dann in einem Kalandrierverfahren durch ein Walzensystem verpresst. Weiterhin wird die Aluminiumfolie bei der Herstellung gewickelter Akkumulatoren zusammen mit den weiteren Schichten des Akkumulators stramm mit relativ kleinen Biegeradien aufgewickelt. Bei diesen Schritten im Produktionsprozess kommt es zu hohen mechanischen Beanspruchungen der Aluminiumfolie, die bei den bisher verwendeten Folien aus hochreinen Aluminiumlegierungen häufiger zur Faltenbildung oder zum Zerreißen der Folien führten. Ebenso kann es aufgrund der mechanischen Belastung zu einem vorzeitigen Versagen des Lithium-Ionen-Akkumulators kommen.

Darüber hinaus limitieren die Werkstoff-bedingten Nachteile eine weitere Abdünnung der Folie auf geringere Dicken, die jedoch zur Erhöhung der Energiedichte des Akkumulators wünschenswert wäre.

Aus der EP 2 857 535 sind Aluminiumwerkstoffe für Stromableiterfolien mit höheren Festigkeiten bekannt; allerdings handelt es sich hierbei um höherlegierte Aluminiumlegierungen mit Aluminiumgehalten von weniger als 99,0 %. Dies führt einerseits zur schlechteren Leitfähigkeit und andererseits zu höheren Kosten für die höheren Gehalte an Legierungsnebenelementen. Unter Legierungsnebenelementen werden die Elemente verstanden, die neben Aluminium in der Aluminiumlegierung enthalten sind, z.B. Si, Cu, Fe, Ti etc.

EP 2 738 849 und EP 2738 850 offenbaren Aluminiumlegierungsfolien für Elektrodenkollektoren und Herstellungsverfahren. Die darin beschrieben Aluminiumfolien wurden mit einem kontinuierlichen Stranggussverfahren hergestellt und weisen hohe Dichten für intermetallischen Phasen einer Durchmesserlänge von 0,1 bis 1,0 $\mu$m auf.

Weitere Aluminiumlegierungen sind aus den chinesischen Patentanmeldungen bzw. Patenten CN 106 929 713 A, CN 103 436 746 A, CN 104 611 616 B, CN 105 063 520 A und CN 107 099 701 A bekannt.

Vor diesem Hintergrund liegt der vorliegenden Erfindung die Aufgabe zugrunde, eine Batterieelektrodenfolie sowie ein Verfahren zur Herstellung einer Batterieelektrodenfolie zur Verfügung zu stellen, die die Kosten- und Leitfähigkeitsvorteile der bisher verwendeten niedrig legierten Folien mit den besseren mechanischen Eigenschaften höherlegierter Folien verbinden.

**ZUSAMMENFASSUNG DER ERFINDUNG**

Zur Lösung dieser Aufgabe wird eine Batterieelektrodenfolie umfassend eine Aluminiumlegierung bereitgestellt, wobei die Aluminiumlegierung die folgende Zusammensetzung in Gew.-% aufweist:

Si: 0,07 - 0,12 Gew.-%,

(fortgesetzt)

| | |
|---|---|
| Fe: | 0,18 - 0,24 Gew.-%, |
| Cu: | 0,03 - 0,08 Gew.-%, |
| Mn: | 0,015 - 0,025 Gew.-%, |
| Zn: | $\leq$ 0,01 Gew.-% |
| Ti: | 0,015 - 0,025 Gew.-%, |

wobei die Aluminiumlegierung Verunreinigungen jeweils bis maximal 0,01 %, insgesamt bis maximal 0,03 % aufweisen kann,

wobei die verbleibenden Gew. % Aluminium sind,

wobei der Anteil an Aluminium jedoch mindestens 99,5 Gew.-% sein muss;

wobei die Batterieelektrodenfolie intermetallische Phasen einer Durchmesserlänge von 0,1 bis 1,0 $\mu$m mit einer Dichte $\leq$ 9500 Partikeln/mm$^2$ aufweist, und wobei die Batterieelektrodenfolie eine Dicke von 8 bis 20 $\mu$m, vorzugsweise von 12 $\mu$m aufweist.

Die Erfinder erkannten, dass durch die an die spezifische Legierungszusammensetzung angepasste Verarbeitung der oben genannten Aluminiumlegierung eine Aluminiumfolie bereitgestellt werden kann, die durch eine geringe Dichte der Phase einer Durchmesserlänge von 0,1 bis 1,0 $\mu$m gekennzeichnet ist und sowohl eine hohe Festigkeit als auch eine gute elektrische Leifähigkeit aufweist.

Bevorzugten Ausführungsformen beziehen sich auf Batterieelektrodenfolie deren intermetallische Phasen eine Durchmesserlänge von 0,1 bis 1,0 $\mu$m mit einer Dichte $\leq$ 7000 Partikeln/mm$^2$ aufweisen.

Die erfindungsgemäßen Batterieelektrodenfolien zeichnen sich daher insbesondere durch eine gute elektrische Leitfähigkeit und bei gleichzeitiger hoher mechanischer Belastbarkeit. Die Batterieelektrodenfolie kann eine elektrische Mindestleitfähigkeit von > 56 % IACS, insbesondere von ungefähr 56 % IACS aufweisen. Ferner kann die Batterieelektrodenfolie kann eine Zugfestigkeit (in Walzrichtung und quer zur Walzrichtung) Rm > 250 MPa aufweisen.

Typischerweise zeigt die Batterieelektrodenfolie eine Oberflächenrauhigkeit Ra von 0,07 bis 0,22 $\mu$m auf beiden Seiten. Bevorzugt beträgt der Unterschied der Oberflächenrauhigkeit Ra auf beiden Seiten der Batterieelektrodenfolie maximal 0,03 $\mu$m.

Insbesondere weist die Batterieelektrodenfolie eine Kohlenstoffbelegung von < 5 mg/m2 auf. In einigen Ausführungsformen liegt die Oberflächenspannung der Batterieelektrodenfolie bei > 30 dyn/cm, wie z.B. bei > 32 dyn/cm.

Die Batterieelektrodenfolie, insbesondere bei einer Dicke von 12 $\mu$m, kann die folgende mechanische Eigenschaften zeigen:

| | |
|---|---|
| Rm (in Walzrichtung): | $\geq$ 250 MPa, |
| Rm (quer zur Walzrichtung): | $\geq$ 250 MPa, |
| Rp0.2 (in Walzrichtung): | $\geq$ 200 MPa, |
| Rp0.2 (quer zur Walzrichtung): | $\geq$ 200 MPa, |
| A100 (in Walzrichtung): | $\geq$ 2,0%, |
| A100 (quer zur Walzrichtung) | $\geq$ 2,0%. |

Zur Erreichung ihrer Eigenschaften ist die Batterieelektrodenfolie dadurch gekennzeichnet, dass das Fe/Si-Verhältnis im Bereich von 1,5 bis 3,5 und das Cu/Ti-Verhältnis im Bereich von 2 bis 5 liegt.

Ein weiterer Aspekt der Erfindung betrifft ein Verfahren zur Herstellung einer Batterieelektrodenfolie (12, 22),

- bei dem ein Aluminiumwarmband (8) mit einer Warmbanddicke von mindestens 2,5 mm aus einer Aluminiumlegierung wie in den Ansprüchen 1, 10 und 11 beschrieben, bereitgestellt wird und
- bei dem das Aluminiumwarmband (8) in mehreren Kaltwalzstichen (K1, Kx, Kx+1, Ky, Ky+1, Kn) auf eine Enddicke von 8 bis 20 $\mu$m kaltgewalzt wird,

wobei das Kaltwalzen ab einer Ausgangsdicke von mindestens 1mm ohne Zwischenglühen erfolgt.

Typischerweise wird das Kaltwalzen von Warmbanddicke auf Enddicke ohne Zwischenglühen durchgeführt.

Die Erfinder erkannten, dass die Verarbeitung der oben beschriebenen Aluminiumlegierung durch ein Verfahren das kein kontinuierliches Stranggussverfahren (continous casting) ist, insbesondere durch das oben beschriebene Verfahren, Aluminiumfolien, insbesondere Batterieelektrodenfolien, mit einer hohen mechanischen Belastbarkeit und einer guten Leitfähigkeit hergestellt werden können.

Im Verfahren wird auf eine Enddicke von 8 bis höchstens 20 $\mu$m, vorzugsweise von 12 $\mu$m kaltgewalzt.

In einigen Ausführungsformen beträgt der Abwalzgrad pro Kaltwalzstich ab einer Ausgangsdicke von zumindest 0,55 mm, vorzugsweise von zumindest 1,5 mm, höchstens 60%.

In besonderen Ausführungsformen des Verfahrens wird das Aluminiumband ab einer Dicke von zumindest 0,1 mm, vorzugsweise von zumindest 0,2 mm, zwischen zwei Kaltwalzstichen abgekühlt, insbesondere auf eine Temperatur von höchstens 50 °C.

Das Aluminiumband kann bis auf Enddicke einlagig kaltgewalzt werden.

Folglich bezieht sich ein weiterer Aspekt der Erfindung auf eine Batterieelektrodenfolie, die nach dem hier beschriebenen Verfahren gefertigt ist.

Ein weiterer Aspekt der Erfindung bezieht sich auf die Verwendung einer Batterieelektrodenfolie als Stromableiterfolie, insbesondere zur Herstellung eines Akkumulators, insbesondere eines Lithium-Ionen-Akkumulators.

Ein anderer Aspekt der Erfindung bezieht sich auf einen Akkumulator, insbesondere Lithium-Ionen-Akkumulator, mit einem Stromableiter aus einer Batterieelektrodenfolie der Erfindung.

## BESCHREIBUNG DER ZEICHNUNGEN

**Abbildung 1**   Erstes Ausführungsbeispiel des erfindungsgemäßen Verfahrens

**Abbildung 2**   Zweites Ausführungsbeispiel des erfindungsgemäßen Verfahrens

**Abbildung 3**   Ausschnitt eines Verfahrens zur Herstellung von Lithium-Ionen-Akkumulatoren

**Abbildung 4a-b**   Schematische Darstellung des Schichtenaufbaus eines Lithium-Ionen-Akkumulators in Flachbauweise

**Abbildung 5a-b**   Schematische Darstellung des Schichtenaufbaus eines Lithium-Ionen-Akkumulators in Zylinderbauweise.

## BESCHREIBUNG BEVORZUGTER AUSFÜHRUNGSFORMEN

Es sei darauf hingewiesen, dass "umfassend" keine anderen Elemente oder Schritte ausschließt und "eine" oder "ein" keine Vielzahl ausschließt. Ferner sei daraufhingewiesen, dass Merkmale oder Schritte, die im Verweis auf eines der Ausführungsbeispiele beschrieben werden, auch in Kombination mit anderen Merkmalen oder Schritten anderer beschriebener Ausführungsbeispiele verwendet werden können.

Es wurde festgestellt, dass mit dieser Aluminiumlegierung trotz der niedrigen Gehalte an Legierungsnebenelementen höhere Festigkeiten erreicht werden können als mit einer bisher genutzten Legierung vom Typ 1050 oder 1085. Insbesondere wurde erkannt, dass sich Aluminiumbänder aus dieser Aluminiumlegierung durch Kaltwalzen, insbesondere durch Folienwalzen, d.h. durch Kaltwalzen ab einer Ausgangsdicke von 200 $\mu$m, gut verfestigen lassen, so dass höhere Festigkeiten auf Enddicke erreichbar sind. Demgegenüber konnten bisher genutzte 1050-Legierungen durch Folienwalzen kaum verfestigt werden. Versuche haben ergeben, dass sich der Rp0,2-Wert bei Aluminiumbändern aus bisher genutzten 1050-Legierungen von typischerweise 50 - 70 MPa beim Warmband durch das Kaltwalzen auf ca. 150 - 175 MPa steigern lässt, wobei sich beim Folienwalzen ab einer Ausgangsdicke von etwa 200 $\mu$m nur noch geringe Festigkeitssteigerungen erreichen lassen. Demgegenüber konnten mit den oben beschriebenen Legierungen auch beim Folienwalzen noch deutliche Festigkeitssteigerungen erreicht werden, so dass sich eine Aluminiumfolie mit einem Rp0,2-Wert von z.B. 240 MPa bei einer Enddicke von z.B. 12 $\mu$m oder 15 $\mu$m herstellen lässt. Außerdem wurde festgestellt, dass sich aus der Aluminiumlegierung durch die beschriebene Verarbeitung Aluminiumfolie herstellen lassen, die durch eine geringe Dichte an Phasen der mit der Durchmesserlänge von 01, bis 1,0 $\mu$m gekennzeichnet sind und eine gute elektrische Leitfähigkeit aufweisen. Dadurch eignen sich diese Aluminiumfolien besonders als Batterieelektrodenfolien zur Herstellung von Akkumulatoren, insbesondere Lithium-Ionen-Akkumulatoren.

Die Aluminiumlegierung weist einen Siliziumgehalt von 0,07 bis 0,12 Gew.-% und einen Eisenanteil von 0,18 bis 0,24 Gew.-% auf. Diese Bereiche haben sich als geeignet für die gewünschten Eigenschaften einer aus der Aluminiumlegierung hergestellten Aluminiumfolie herausgestellt. Mit den angegebenen Si- und Fe-Gehalten wird zudem ein günstiges Fe-Si-Verhältnis im Bereich von 1,5 bis 3,5 erreicht. Höhere Fe-Si-Verhältnisse führen in der Folie zu höheren Anteilen der AlFe-Phase, die für die mechanischen Eigenschaften der Folie nachteilig ist. Unter dem Fe-Si-Verhältnis wird das Verhältnis des Fe-Gehalts in Gew.-% zum Si-Gehalt in Gew.-% verstanden.

Durch die Beschränkung des Fe-Gehalts auf maximal 0,24 Gew.-% wird zudem erreicht, dass die aus der Legierung hergestellte Aluminiumfolie eine gute Korrosionsstabilität aufweist, d.h. eine geringe Korrosionsneigung zeigt.

Dies ist insbesondere ein Vorteil gegenüber Aluminiumfolien aus höherlegierten Aluminiumlegierungen, mit denen zwar ebenfalls recht gute Festigkeiten erreichbar sind, die jedoch in viel stärkerem Maße zur Korrosion neigen.

Die Aluminiumlegierung weist weiterhin einen Kupfergehalt von 0,03 bis 0,08 Gew.-%, einen Mangangehalt von 0,015 bis 0,025 Gew.-%, einen Zinkgehalt von max. 0,01 Gew.-% und einen Titangehalt von 0,015 bis 0,025 Gew.-% auf. Es wurde festgestellt, dass durch die genaue gemeinsame Einstellung der Elemente Cu, Ti, Mn und Zn in den jeweils angegebenen Bereichen eine niedrig legierte Aluminiumlegierung erreicht wird, die sich gleichwohl gut durch Kaltumformung, insbesondere durch Folienwalzen, verfestigen lässt.

Insbesondere wird durch die gewählten Gehalte von Kupfer, Titan und Mangan eine gute Mischkristallverfestigung erreicht, so dass aus dieser Legierung hergestellte Aluminiumfolien gegenüber entsprechenden Aluminiumfolien aus bisher verwendeten 1050-Legierungen verbesserte Festigkeiten aufweisen.

Darüber hinaus bleiben Cu und Mn, aber auch Si aufgrund deren Löslichkeitsgrenzen größtenteils in der Lösung, d.h. in der Aluminium-Matrix, und üben eine rücktreibende Kraft auf statische und dynamische Erholung aus. Das ermöglicht mit den angegebenen Gehalten für Cu, Mn und Si eine kontinuierliche Festigkeitssteigerung durch Kaltverfestigung. Weiterhin führt die beschriebene Zusammensetzung zu einer besseren Thermostabilität der Aluminiumfolie, da die Entfestigung der Aluminiumfolie bei Wärmebehandlung durch die gelösten Elemente gehemmt wird.

Bei der hier beschriebenen Legierung handelt es sich je nach Kupfergehalt um eine 1050 bzw. 1100 er-Legierung. Obwohl die 1050-Spezifikation grundsätzlich Cu-, Mn- und Zn-Gehalte bis zu 0,05 Gew.-% zulässt, liegen die tatsächlichen Verunreinigungsgehalte dieser Elemente bei typischen 1050-Legierungen im Allgemeinen jedoch weit darunter. Um die hier beschriebene Legierungszusammensetzung zu erreichen, werden insbesondere die Elemente Cu, Mn und Zn daher gezielt hinzulegiert.

Mit den angegebenen Gehalten für Kupfer und Titan wird zudem ein günstiges Cu-Ti-Verhältnis von 2 bis 5 erreicht. Hierdurch lässt sich eine höhere Leitfähigkeit der Legierung erreichen. Ti weist einen signifikant höheren elementspezifischen Widerstandskoeffizienten auf als Cu. Durch ein Cu-Ti-Verhältnis von mindestens 2 kann die negative Wirkung des Ti auf die Leitfähigkeit durch das Cu kompensiert werden. Gleichzeitig ist es durch diese Kompensation nicht erforderlich, vollständig auf Ti zu verzichten, so dass Ti oder Ti-haltiger Kornfeiner, z.B. Titanborid, hinzulegiert werden kann.

Die oben genannte Aufgabe wird erfindungsgemäß weiterhin gelöst durch ein Verfahren zur Herstellung einer Aluminiumfolie, insbesondere einer Batterieelektrodenfolie, bei dem ein Aluminiumwarmband mit einer Warmbanddicke von mindestens 3 mm aus der zuvor beschriebenen Aluminiumlegierung bereitgestellt wird und bei dem das Aluminiumwarmband in mehreren Kaltwalzstichen auf eine Enddicke von minimal 8 und höchstens 20 $\mu$m kaltgewalzt wird, wobei das Kaltwalzen ab einer Ausgangsdicke ohne Zwischenglühen erfolgt. Weiterhin wird die Aufgabe erfindungsgemäß durch eine mit diesem Verfahren hergestellte Aluminiumfolie gelöst.

Durch das Folienwalzen ohne Zwischenglühen der erfindungsgemäßen Legierung wird ein höhere Festigkeit in Kombination mit einer guten elektrischen Leitfähigkeit erreicht. Die Phasenanalyse zeigt, dass diese Ausführung eine geringe Dichte von Phasen einer Durchmesserlänge von 0,1 bis 1,0 $\mu$m aufweisen.

Die Dichte der Phasen wurde am Rasterelektronmikroskop bei einer Vergrößerung von 1000x und mit einer Beschleunigungsspannung von 10 kV ermittelt; Proben für diese Untersuchung wurden mechanisch mit OPS (oxide polishing suspension) präpariert

Tabelle 1

| Foliendicke | Phasenanzahl (Durchmesserlänge 0,1-1,0 $\mu$m)/mm$^2$ |
|---|---|
| 15 $\mu$m | $4 \times 10^3$ |
| 12 $\mu$m | $3 \times 10^3$ |

Die hier angegebenen Durchmesserlängen, beziehen sich auf die maximalen Durchmesserlängen der Partikel. Die Partikel werden in den Rasterelektronenmikroskopaufnahmen als zweidimensionale Partikel dargestellt. Der längste zu detektierende Durchmesser dieser zweidimensionalen Darstellung gibt die maximale Durchmesserlänge wieder.

Daher ist ein Hauptaspekt der Erfindung ist die Bereitstellung einer Batterieelektrodenfolie umfassend eine Aluminiumlegierung,
wobei die Aluminiumlegierung die folgende Zusammensetzung in Gew.-% aufweist:

Si:           0,07 - 0,12 Gew.-%,

Fe:           0,18 - 0,24 Gew.-%,

Cu:           0,03 - 0,08 Gew.-%,

Mn:           0,015 - 0,025 Gew.-%,

(fortgesetzt)

| | |
|---|---|
| Zn: | $\leq$ 0,01 Gew.-% |
| Ti: | 0,015 - 0,025 Gew.-%, |

wobei die Aluminiumlegierung Verunreinigungen jeweils bis maximal 0,01 %, insgesamt bis maximal 0,03 % aufweisen kann,

wobei die verbleibenden Gew. % Aluminium sind,

wobei der Anteil an Aluminium jedoch mindestens 99,5 Gew.-% sein muss;

wobei die Batterieelektrodenfolie intermetallische Phasen einer Durchmesserlänge von 0,1 bis 1,0 $\mu$m mit einer Dichte $\leq$ 9500 Partikeln/mm$^2$ aufweist, und wobei die Batterieelektrodenfolie eine Dicke von 8 bis 20 $\mu$m, vorzugsweise von 12 $\mu$m aufweist.

Der Fachmann ist mit Verfahren zur Bestimmung der Durchmesserlänge der intermetallischen Phasen vertraut. Beispielsweise können die Durchmesserlänge mit Hilfe eines Feldemissionsrasterelektronenmikroskops (Zeiss Merlin) mit B2D4-Detektor (pneumatisch betriebener Detektor für Feldemissions-Rastereletronenmikroskop) bei einer Vergrößerung von 1000x und einer Beschleunigungsspannung von 10kV gemessen werden.

Besondere Ausführungsformen beziehen sich auf eine Batterieelektrodenfolie mit einer Banddicke von $\leq$ 15 $\mu$m, die intermetallische Phasen einer Durchmesserlänge von 0,1 bis 1,0 $\mu$m mit einer Dichte $\leq$ 9500 Partikeln/mm$^2$, bevorzugt $\leq$ 7000 Partikel/mm$^2$, wie $\leq$ 6000 Partikel/mm$^2$ oder $\leq$ 5000 Partikel/mm$^2$, besonders bevorzugt $\leq$ 4000 Partikel/mm$^2$ aufweist. Insbesondere können die Batterieelektrodenfolie mit einer Banddicke von $\leq$ 15 $\mu$m, die intermetallische Phasen einer Durchmesserlänge von 0,1 bis 1,0 von $\leq$ 4000 Partikel/mm$^2$ aufweisen, gemessen bei einer Vergrößerung von 1000x und einer Beschleunigungsspannung von 10kV.

Besondere Ausführungsformen beziehen sich auf Batterieelektrodenfolie mit einer Banddicke von $\leq$ 12 $\mu$m, die intermetallische Phasen einer Durchmesserlänge von 0,1 bis 1,0 $\mu$m mit einer Dichte $\leq$ 9500 Partikeln/mm$^2$, bevorzugt $\leq$ 7000 Partikel/mm$^2$, wie $\leq$ 6000 Partikel/mm$^2$, $\leq$ 5000 Partikel/mm$^2$ oder $\leq$ 4000 Partikel/mm$^2$, besonders bevorzugt $\leq$ 3000 Partikel/mm$^2$ aufweist. Insbesondere können die Batterieelektrodenfolie mit einer Banddicke von $\leq$ 12 $\mu$m, die intermetallische Phasen einer Durchmesserlänge von 0,1 bis 1,0 von $\leq$ 3000 Partikel/mm$^2$ aufweisen, gemessen bei einer Vergrößerung von 1000x und einer Beschleunigungsspannung von 10kV.

Typischer Weise weist die Batterieelektrodenfolie intermetallische Phase einer Durchmesserlänge von 0,1 bis 1,0 $\mu$m mit einer Dichte von mindestens 100 Partikeln/mm$^2$, mindestens 1000 Partikeln/mm$^2$ auf.

In besonderen Ausführungsformen weist die Batterieelektrodenfolie intermetallische Phase einer Durchmesserlänge von $\geq$ 1,0 $\mu$m mit einer Dichte von mindestens 2000 Partikeln/mm$^2$ auf. Insbesondere kann eine Batterieelektrodenfolie mit einer Banddicke von $\leq$ 12 $\mu$m, intermetallische Phasen einer Durchmesserlänge von $\geq$ 1,0 $\mu$m mit einer Dichte von mindestens 3000 Partikeln/mm$^2$, bevorzugt mindestens 4000 Partikel/mm$^2$ aufweisen. Insbesondere kann eine Batterieelektrodenfolie mit einer Banddicke von $\leq$ 12 $\mu$m, intermetallische Phasen einer Durchmesserlänge von $\geq$ 1,0 $\mu$m mit einer Dichte von mindestens 4000 Partikel/mm$^2$ aufweisen, gemessen bei einer Vergrößerung von 1000x und einer Beschleunigungsspannung von 10kV.

Insbesondere können, Batterieelektrodenfolie mit einer Banddicke von $\leq$ 15 $\mu$m, die intermetallische Phasen eine Durchmesserlänge von $\geq$ 1,0 $\mu$m einer Dichte von mindestens 3000 Partikeln/mm$^2$, bevorzugt mindestens 4000 Partikel/mm$^2$, aufweisen. Insbesondere kann eine Batterieelektrodenfolie mit einer Banddicke von $\leq$ 15 $\mu$m, intermetallische Phasen einer Durchmesserlänge von $\geq$ 1,0 $\mu$m mit einer Dichte von mindestens 4000 Partikel/mm$^2$ aufweisen, gemessen bei einer Vergrößerung von 1000x und einer Beschleunigungsspannung von 10kV.

Es wurde festgestellt, dass sich ein Aluminiumband aus der zuvor beschriebenen Legierung durch Kaltwalzen und Folienwalzen von einer Dicke von mindestens 3 mm auf mindestens 8 und höchstens 20 $\mu$m so verfestigen lässt, dass die erzielten Festigkeitswerte auf Enddicke die Festigkeitswerte bisheriger 1050-Legierungen deutlich übertreffen. Insbesondere lassen sich durch dieses Verfahren Festigkeiten der Aluminiumfolie erreichen, für die bisher höherlegierte Legierungen eingesetzt werden mussten. Die mit dem Verfahren hergestellte Aluminiumfolie weist demnach eine erhöhte Festigkeit bei gleichzeitig guter Leitfähigkeit aufgrund der geringen Legierungsnebenelementgehalte auf. Gegenüber höherlegierten Legierungen können zudem die Produktionskosten gering gehalten werden, da weniger Material hinzulegiert werden muss, um die erforderlichen Legierungsnebenelementgehalte zu erreichen. Weiterhin weist die Aluminiumfolie gegenüber Folien aus höherlegierten Aluminiumfolien eine verbesserte Korrosionsstabilität auf.

Dadurch eignet sich die Aluminiumfolie besonders gut zur Herstellung von Akkumulatoren, insbesondere Lithium-Ionen-Akkumulatoren. Entsprechend wird die oben genannte Aufgabe erfindungsgemäß weiterhin gelöst durch die Verwendung der zuvor genannten Aluminiumlegierung zur Herstellung von Akkumulatoren, insbesondere Lithium-Ionen-Akkumulatoren sowie durch die Verwendung der zuvor beschriebenen Aluminiumfolie als Stromableiterfolie, insbesondere zur Herstellung eines Akkumulators, insbesondere eines Lithium-Ionen-Akkumulators. Darüber hinaus wird die zuvor genannte Aufgabe gelöst durch einen Akkumulator, insbesondere einen Lithium-Ionen-Akkumulator, mit einem Stromableiter aus der zuvor beschriebenen Aluminiumfolie.

Bei dem Verfahren wird ein Aluminiumwarmband mit einer Warmbanddicke von mindestens 3 mm aus der zuvor genannten Legierung bereitgestellt. Unter der Warmbanddicke wird die Dicke des Aluminiumbands verstanden, die am Ende des Warmwalzens erreicht ist. Das Aluminiumwarmband kann beispielsweise dadurch hergestellt werden, dass ein Barren aus einer Schmelze mit der zuvor genannten Legierungszusammensetzung gegossen und nach einer optionalen Homogenisierungsbehandlung auf eine Dicke von 3 mm oder mehr warmgewalzt wird. Die Warmbandtemperatur, d.h. die Temperatur des Warmbands unmittelbar nach dem letzten Warmbandstich, liegt typischerweise im Bereich zwischen 300 °C und 350° C, beispielsweise bei 330° C.

Das Aluminiumwarmband wird in mehreren Kaltwalzstichen auf eine Enddicke von 8 bis höchstens 20 $\mu$m kaltgewalzt. Die Anzahl der Kaltwalzstiche kann bedarfsgemäß eingestellt werden, beträgt vorzugsweise jedoch mindestens sieben.

Das Kaltwalzen erfolgt ab einer Ausgangsdicke von mindestens 1 mm, vorzugsweise mindestens 2 mm, insbesondere mindestens 3 mm, ohne Zwischenglühung. Das bedeutet, dass das Aluminiumband ab einer Dicke von mindestens 1 mm, vorzugsweise mindestens 2 mm, insbesondere mindestens 3 mm, zwischen zwei Kaltwalzstichen keiner Zwischenglühung (mehr) unterzogen wird. Vorzugsweise erfolgt bereits ab Warmbanddicke keine Zwischenglühung, d.h. das Kaltwalzen erfolgt vorzugsweise vollständig ohne Zwischenglühungen.

Unter der Ausgangsdicke wird die Dicke des Aluminiumbands vor dem betreffenden Kaltwalzstich verstanden. Unter einem Stich wird das einmalige Walzen eines Bands verstanden.

Eine Zwischenglühung führt zu einer zumindest teilweisen Rekristallisierung des Aluminiumbands bzw. zu einer Reduzierung von Versetzungen und wirkt einer Materialverfestigung entgegen. Durch den Verzicht auf die Zwischenglühung ab einer bestimmten Ausgangsdicke kann durch die starke Umformung des Bands eine gute Verfestigung erreicht werden, so dass das Aluminiumband bzw. die Aluminiumfolie auf Enddicke gute Festigkeiten aufweist.

Bei Bändern aus normalen 1050-Legierungen erfolgt das Kaltwalzen bzw. insbesondere das Folienwalzen demgegenüber typischerweise mit Zwischenglühung, zumal mit den üblichen 1050-Legierungen ohnehin keine nennenswerte Verfestigung durch das Folienwalzen erreicht werden kann.

Im Folgenden werden verschiedene Ausführungsformen der Aluminiumlegierung, des Verfahrens, der Aluminiumfolie, dessen Verwendung und des Akkumulators beschrieben. Die einzelnen Ausführungsformen sind jeweils für die Aluminiumlegierung, das Verfahren, die Aluminiumfolie, dessen Verwendung und den Akkumulator anwendbar und können darüber hinaus auch untereinander kombiniert werden.

Bei einer ersten Ausführungsform liegt das Fe-Si-Verhältnis der Aluminiumlegierung im Bereich 1,9 bis 3,5 . Auf diese Weise lassen sich günstige Festigkeitseigenschaften der Aluminiumfolie erreichen. Insbesondere kann die für die mechanischen Eigenschaften nachteilige AlFe-Phase auf einen Anteil von etwa 0.4% begrenzt werden. Entsprechende Legierungen mit einem Fe-Si-Verhältnis von 3,5 oder mehr weisen demgegenüber einen etwa doppelt so hohen Anteil der AlFe-Phase (etwa 0.8%) auf. Außerdem begünstigt ein Fe-Si-Verhältnis im genannten Bereich ein partielles Auflösen der Phasen im Temperaturbereich von 400-500°C und die Bildung der für die Dehnungseigenschaften der Aluminiumfolie vorteilhaften AlFeSi-Dispersoiden.

Bei einer weiteren Ausführungsform liegt das Cu-Ti-Verhältnis der Aluminiumlegierung im Bereich 2,5 bis 5. Hierdurch wurde eine gute Verfestigung beim Kaltwalzen erreicht.

Bei einer weiteren Ausführungsform des Verfahrens liegt die Warmbanddicke im Bereich 3 - 5 mm. Mit einer Mindestdicke des Warmbands von 4 mm konnten beim nachfolgenden Kaltwalzen auf die angestrebte Enddicke gute Verfestigungen erreicht werden. Vorzugsweise erfolgt das Kaltwalzen ab Warmbanddicke ohne Zwischenglühen. Bei einer Warmbanddicke von mehr als 5 mm lässt sich das Warmband nur noch schlecht handhaben, insbesondere schlecht zu einem Coil aufwickeln.

Bei einer weiteren Ausführungsform erfolgt das Kaltwalzen von Warmbanddicke auf Enddicke ohne Zwischenglühen. Bei dieser Ausführungsform wird also grundsätzlich auf ein Zwischenglühen zwischen den Kaltwalzstichen verzichtet, unabhängig von der Ausgangsdicke. Auf diese Weise kann eine verbesserte Verfestigung des Aluminiumbands durch das Kaltwalzen erreicht werden.

Es wird auf eine Enddicke von 8 bis 20 $\mu$m, vorzugsweise höchstens 15 $\mu$m, insbesondere höchstens 10 bis 12 $\mu$m kaltgewalzt. Bei einer entsprechenden Ausführungsform der Aluminiumfolie weist diese eine Dicke von 8 bis 20 $\mu$m, vorzugsweise höchstens 15 $\mu$m, insbesondere höchstens 12 $\mu$m auf. Mit der zuvor beschriebenen Legierung lassen sich Aluminiumfolien mit geringer Dicke herstellen, die gleichwohl eine hohe Festigkeit aufweisen, so dass sie bei der Verarbeitung zu Akkumulatoren nicht reißen. Dadurch lassen sich Material und Gewicht einsparen sowie die Energiedichte der Akkumulatoren erhöhen.

Bei einer weiteren Ausführungsform beträgt der Abwalzgrad pro Kaltwalzstich ab einer Ausgangsdicke von zumindest 0,7 mm, vorzugsweise ab einer Ausgangsdicke von zumindest 1,5 mm höchstens 60 %. Der Abwalzgrad pro Kaltwalzstich wird demnach auf max. 60% begrenzt, bevor die Ausgangsdicke einen Wert von 0,7 mm bzw. bevorzugt von 1,5 mm unterschreitet.

Unter dem Abwalzgrad A eines Kaltwalzstichs wird die Dickenänderung durch den Kaltwalzstich, d.h. die Differenz zwischen der Banddicke nach dem Kaltwalzstich $d_{nach}$ und der Ausgangsdicke $d_{vor}$, im Verhältnis zur Aus-

gangsdicke $d_{vor}$, angegeben in Prozent, verstanden:

$$A = (d_{vor} - d_{nach})/d_{vor}$$

Wird das Band in einem Kaltwalzstich zum Beispiel von 200 $\mu$m auf 100 $\mu$m abgewalzt, so ergibt sich für den Abwalzgrad: A = (200$\mu$m - 100$\mu$m)/200$\mu$m = 0,5 = 50%.

Es wurde festgestellt, dass der durch die Kaltwalzumformung hervorgerufene Wärmeeintrag das Aluminiumband so stark erwärmen kann, dass eine nennenswerte Entfestigung eintritt. Durch die Begrenzung des Abwalzgrads auf höchstens 60 % ab einer Ausgangsdicke von zumindest 0,7 mm, vorzugsweise zumindest 1,5 mm, wird dies verhindert, so dass sich bessere Festigkeiten des Bands bei Enddicke erreichen lassen.

Bei einer weiteren Ausführungsform wird das Aluminiumband ab einer Dicke von zumindest 0,1 mm, vorzugsweise zumindest ab einer Dicke von zumindest 0,2 mm, zwischen zwei Kaltwalzstichen abgekühlt, insbesondere auf eine Temperatur von höchstens 50 °C. Auf diese Weise kann die durch die Kaltwalzumformung in das Band eingebrachte Wärmeenergie zwischen den einzelnen Kaltwalzstichen abgegeben werden, so dass die Temperatur des Aluminiumbands nicht über mehrere Kaltwalzstiche übermäßig ansteigt, was zu einer Entfestigung des Bands führen würde. Dadurch sind höhere Festigkeiten bei Enddicke erreichbar. Da der Wärmeanstieg pro Kaltwalzstich besonders bei dünneren Banddicken kritisch ist, wird bei der Ausführungsform des Verfahrens mit dem Abkühlschritt zwischen zwei Kaltwalzstichen begonnen, bevor die Ausgangsdicke einen Wert von 0,7 mm, vorzugsweise 1,5 mm unterschreitet.

Zur Abkühlung des Aluminiumbands kann dieses zwischen zwei Kaltwalzstichen beispielsweise für mindestens 24 Stunden gelagert werden, vorzugsweise bei Raumtemperatur. Dadurch lässt sich ein Abkühlen des Bands von typischerweise 80 °C bis 100 °C unmittelbar nach einem Kaltwalzstich auf höchstens 50 °C erreichen.

Bei einer weiteren Ausführungsform wird das Aluminiumband bis auf Enddicke einlagig kaltgewalzt. Das Aluminiumband wird demnach auch bei dünnen Ausgangsdicken nicht gedoppelt, wie es sonst bei der Herstellung von Aluminiumfolie üblich ist. Durch das einlagige Walzen bis auf Enddicke weist die Aluminiumfolie beidseitig eine ähnliche Beschaffenheit auf, insbesondere vergleichbare Rauheiten, was sich positiv auf die gleichmäßige Beschichtbarkeit der Aluminiumfolie auswirkt.

Darüber hinaus kann durch das einlagige Walzen auf Enddicke gegenüber doppelt gewalzten Aluminiumfolien die erforderliche Menge an Walzöl reduziert werden, da für das doppellagige Walzen eine erhebliche Menge Walzöl zwischen die beiden Aluminiumlagen aufgebracht werden muss, um diese nach dem Walzen voneinander trennen zu können. Durch das einlagige Walzen lassen sich damit organische Verunreinigungen auf der Bandoberfläche reduzieren, vorzugsweise auf eine Restwalzölbelegung von maximal 5 mg Kohlenstoff pro Quadratmeter, was sich als vorteilhaft bei der Verwendung der Aluminiumfolie zur Herstellung von Lithium-Ionen-Akkumulatoren herausgestellt hat.

Bei einer weiteren Ausführungsform weist die Aluminiumfolie, insbesondere bei einer Dicke von maximal 15 $\mu$m, folgende mechanische Eigenschaften auf, insbesondere im walzharten Zustand:

| | |
|---|---|
| Rm (in Walzrichtung): | $\geq$ 280 MPa, |
| Rm (quer zur Walzrichtung): | $\geq$ 280 MPa, |
| Rp0,2 (in Walzrichtung): | $\geq$ 240 MPa, |
| Rp0,2 (quer zur Walzrichtung): | $\geq$ 220 MPa, |
| A100 (in Walzrichtung): | $\geq$ 2,6 % und |
| A100 (quer zur Walzrichtung): | $\geq$ 3,3 %. |

Bei einer weiteren Ausführungsform weist eine Aluminiumfolie (mit einer Rm in Walzrichtung $\geq$ 280 MP im Ausgangszustand) nach einer Wärmebehandlung für 2 Minuten bei 150 °C folgende mechanische Eigenschaften auf (gemessen im Zugversuch nach DIN 50154:1980-12 und DIN EN 546-2:2007-03):

| | |
|---|---|
| Rm (in Walzrichtung): | $\geq$ 270 MPa, |
| Rp0,2 (in Walzrichtung): | $\geq$ 200 MPa und |
| A100 (in Walzrichtung): | $\geq$ 2 %. |

Bei einer weiteren Ausführungsform weist die Aluminiumfolie, insbesondere bei einer Dicke von maximal 12 $\mu$m, folgende mechanische Eigenschaften auf, insbesondere im walzharten Zustand:

| | |
|---|---|
| Rm (in Walzrichtung): | $\geq$ 250 MPa, |
| Rm (quer zur Walzrichtung): | $\geq$ 250 MPa, |

(fortgesetzt)

| Rp0.2 (in Walzrichtung): | ≥ 200 MPa, |
|---|---|
| Rp0.2 (quer zur Walzrichtung): | ≥ 200 MPa, |
| A100 (in Walzrichtung): | ≥ 2,0%, |
| A100 (quer zur Walzrichtung) | ≥ 2,0%. |

Rm ist die Zugfestigkeit, Rp0,2 die 0,2 %-Dehngrenze und A100 die Bruchdehnung (mit Probenlänge 100mm), jeweils gemessen im Zugversuch nach DIN 50154:1980-12 und DIN EN 546-2:2007-03.

Der Zusatz "in Walzrichtung" bedeutet, dass je eine Zugprobe mit der Probenlänge in Walzrichtung zu verwenden ist, und der Zusatz "quer zur Walzrichtung" bedeutet, dass je eine Zugprobe mit der Probenlänge quer zur Walzrichtung zu verwenden ist.

Es wurde festgestellt, dass durch die Verwendung der zuvor beschriebenen Legierung und des zuvor beschriebenen Verfahrens eine Folie hergestellt werden kann, die die oben genannten mechanischen Eigenschaften aufweist. Insbesondere die Festigkeit Rm liegt weit über den Festigkeitswerten, die mit bisher verwendeten 1050-Legierungen erreicht worden sind.

Es wurde festgestellt, dass mit der beschriebenen Legierung eine gute Kurzzeit-Thermostabilität bei Temperaturen bei Temperaturen ≤ 150°C der Aluminiumfolie erreicht werden kann, so dass die Aluminiumfolie auch nach einer solchen Wärmebehandlung gute mechanische Eigenschaften aufweist. Dies ist insbesondere vorteilhaft bei der Verwendung der Aluminiumfolie zur Herstellung von Lithium-Ionen-Akkumulatoren, da die Aluminiumfolie auch nach einem, der Beschichtung mit Lithium-haltigem Elektrodenmaterial folgenden Trocknungsvorgang gute Festigkeitswerte aufweist.

Bei einer weiteren Ausführungsform weist die Aluminiumfolie auf beiden Seiten einen Rauheitswert Ra im Bereich von 0,07 bis 0,22 µm auf, gemessen nach DIN EN ISO 4287:2010 (mit einem stationären Rauheitsmessgerät Hommel-Tester T8000 RC). Vorzugsweise unterscheidet sich der Rauheitswert Ra auf einer Seite der Aluminiumfolie von dem Rauheitswert Ra auf der anderen Seite der Aluminiumfolie um maximal 0,03 µm. Dies kann insbesondere dadurch erreicht werden, dass die Aluminiumfolie einlagig auf Enddicke gewalzt wird. Auf diese Weise lässt sich die Aluminiumfolie gleichmäßiger beidseitig beschichten.

Bei einer weiteren Ausführungsform weist die Aluminiumfolie eine elektrische Leitfähigkeit ≥ 56 % IACS (International Annealed Copper Standard), bestimmt über eine Widerstandsmessung mittels einer Wheatstoneschen Messbrücke, auf. Diese gute Leitfähigkeit wird insbesondere durch die geringen Anteile der Legierungsnebenelemente erzielt. Auf diese Weise eignet sich die Aluminiumfolie gut für Stromableiter. In besonderen Ausführungsformen liegt die elektrische Leitfähigkeit bei 55 % bis 63 %, bevorzugt 56 % bis 60 %, besonders bevorzugt 56 % bis 58%, wie z.B. 56 % .

Weitere Merkmale und Vorteile der vorliegenden Erfindung ergeben sich aus der nachfolgenden Beschreibung verschiedener Ausführungsbeispiele, wobei auf die beigefügte Zeichnung Bezug genommen wird.

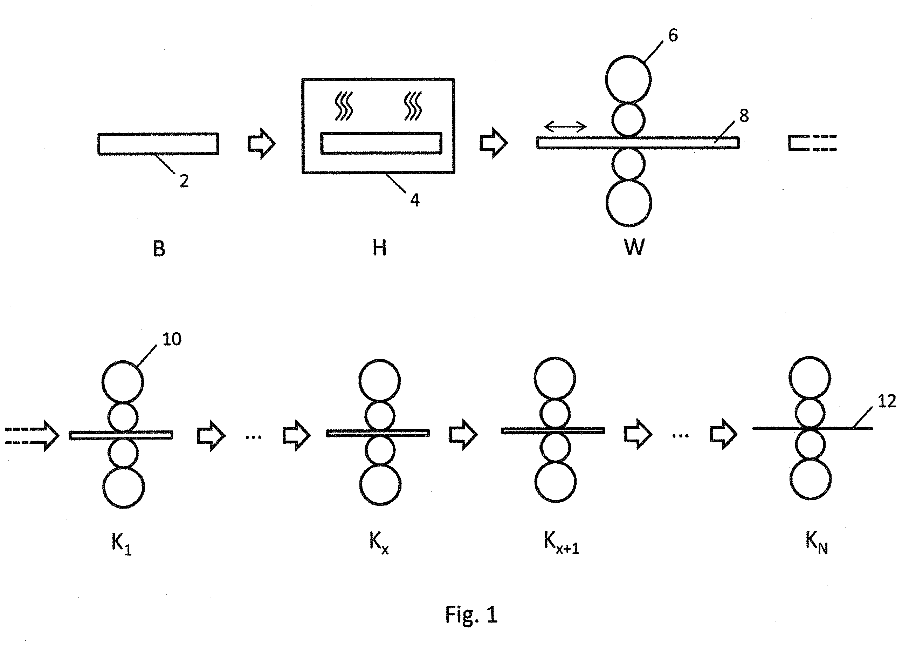

Figur 1 zeigt ein erstes Ausführungsbeispiel des erfindungsgemäßen Verfahrens.

Bei dem Verfahren wird zunächst im Schritt B ein Barren 2 mit folgender Zusammensetzung gegossen:

| Si: | 0,07 - 0,12 Gew.-% |
|---|---|
| Fe: | 0,18-0,24 Gew.-% |
| Cu: | 0,03 - 0,08 Gew.-% |
| Mn: | 0,015 - 0,025 Gew.-% |
| Zn: | max. 0,01 Gew.-% |
| Ti: | 0,015 - 0,025 Gew.-% |
| Al: | Rest, mindestens jedoch 99,5 Gew.-%, |
| unvermeidliche Verunreinigungen einzeln ≤ 0,01 Gew.-%, in Summe ≤ 0,03 Gew.-%. | |

Der Barren kann anschließend einer optionalen Homogenisierungsbehandlung in einem Homogenisierungsofen 4 unterzogen werden (Schritt H). Nach der Homogenisierungsbehandlung wird der Barren in einem reversierenden Warmwalzgerüst 6 (in Fig. 1 durch den Doppelpfeil verdeutlicht) zu einem Aluminiumwarmband 8 mit einer Warmbanddicke zwischen 3 und 5 mm warmgewalzt (Schritt W).

Nach dem Warmwalzen wird das Aluminiumwarmband 8 in einem Kaltwalzgerüst 10 in mehreren Kaltwalzstichen auf eine Enddicke von beispielsweise 15 µm kaltgewalzt. Figur 1 zeigt exemplarisch den ersten Kaltwalzstich (Schritt $K_1$), den letzten Kaltwalzstich (Schritt $K_N$, wobei "N" für die Gesamtzahl der Kaltwalzstiche steht) sowie zwei aufeinanderfolgende Kaltwalzstiche (Schritte $K_x$ und $K_{x+1}$) zwischen dem ersten und dem letzten Kaltwalzstich. Nach dem Kaltwalzstich $K_x$ weist das Aluminiumband eine Dicke von mindestens 1 mm auf. Die Ausgangsdicke für den

Kaltwalzstich $K_{x+1}$ beträgt also 1 mm oder mehr. Der Kaltwalzstich $K_{x+1}$ folgt auf den Kaltwalzstich $K_x$, ohne dass eine Zwischenglühung des Aluminiumbands erfolgt. Ebenso folgen alle weiteren Kaltwalzstiche bis zum letzten Kaltwalzstich ohne Zwischenglühung aufeinander. Auf diese Weise wird über die einzelnen Kaltwalzstiche ab $K_x$ eine hohe Verfestigung der hergestellten Aluminiumfolie 12 erreicht, ohne dass es durch Zwischenglühungen zwischen den Kaltwalzstichen zu einer Entfestigung der Folie kommt. Vorzugsweise wird vollständig auf ein Zwischenglühen beim Kaltwalzen verzichtet. Zusätzlich wird der Abwalzgrad der einzelnen Kaltwalzstiche ab einer Ausgangsdicke von zumindest 1,5 mm auf maximal 60% begrenzt.

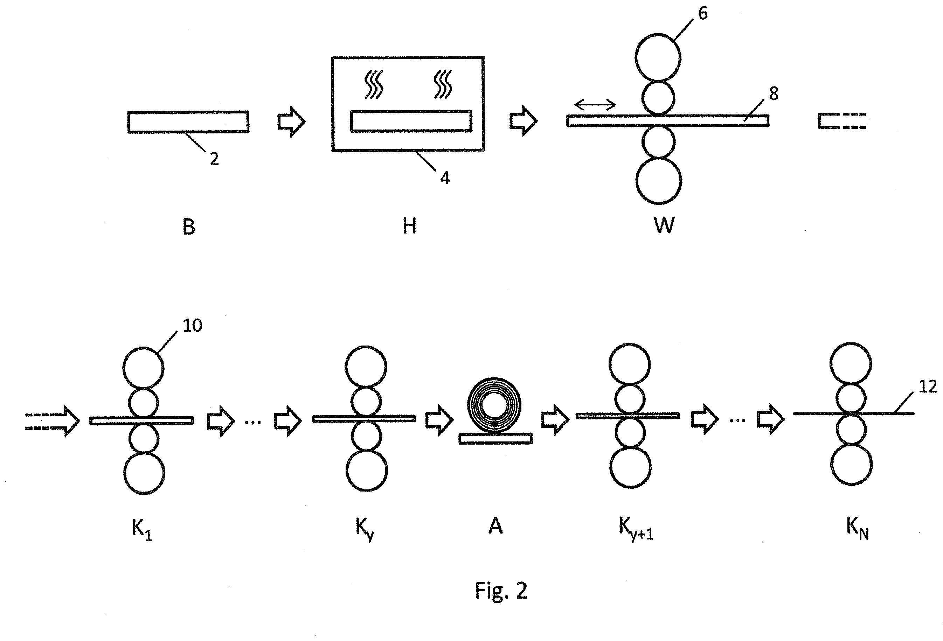

Figur 2 zeigt ein alternatives Ausführungsbeispiel des erfindungsgemäßen Verfahrens, wobei gleiche Komponenten mit gleichen Bezugszeichen versehen sind. Wie beim Verfahren aus Fig. 1 erfolgt ab einer Ausgangsdicke von zumindest 1 mm kein Zwischenglühen und der Abwalzgrad ist ab einer Ausgangsdicke von zumindest 1,5 mm auf maximal 60% begrenzt. Das in Figur 2 gezeigte Ausführungsbeispiel unterscheidet sich dadurch von dem Ausführungsbeispiel aus Figur 1, dass zwischen den einzelnen Kaltwalzstichen ab einer Banddicke von 0,1 mm jeweils ein Abkühlschritt A vorgesehen ist (in Fig. 2 exemplarisch zwischen $K_y$ und $K_{y+1}$ illustriert).

Durch die beim Kaltwalzen in das Aluminiumband eingebrachte Umformenergie weist das Aluminiumband unmittelbar nach einem Kaltwalzstich typischerweise eine Temperatur im Bereich von 80 °C - 100 °C auf. Bei dem Abkühlschritt A wird das Band als Coil für einen Zeitraum von mindestens 24 h bei Raumtemperatur gelagert und kühlt dadurch langsam auf eine Temperatur von weniger als 50 °C ab. Dadurch werden eine übermäßige Erwärmung des Aluminiumbands über mehrere aufeinanderfolgende Kaltwalzstiche und eine damit verbundene Entfestigung des Aluminiumbands vermieden. Dadurch kann die Festigkeit der Aluminiumfolie 12 bei Enddicke erhöht werden.

Die mit dem zuvor beschriebenen Verfahren hergestellten Aluminiumfolien sind besonders für den Einsatz als Stromableiter bei der Herstellung von Lithium-Ionen-Akkumulatoren geeignet.

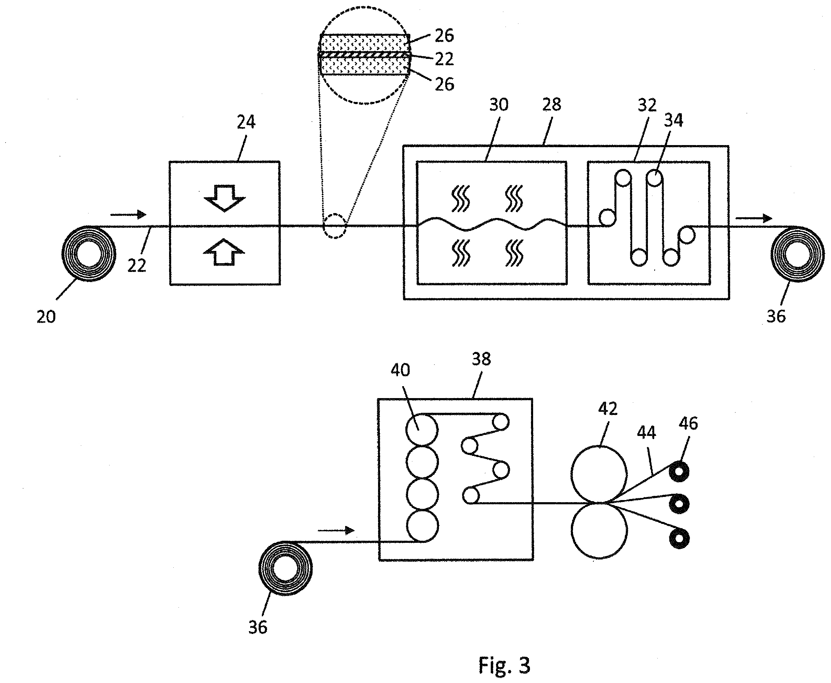

Figur 3 illustriert die Herstellung von Kathodenlagen für Lithium-Ionen-Akkumulatoren, aus der die mechanischen Anforderungen an die Aluminiumfolie 12 ersichtlich werden.

Bei dem Verfahren wird von einem Coil 20 eine Aluminiumfolie 22 abgewickelt, die als Träger des Elektrodenmaterials und Stromableiter dient. Die Aluminiumfolie 22 kann beispielsweise mit dem in Fig. 1 oder Fig. 2 dargestellten Verfahren hergestellt sein, z.B. kann es sich um Folie 12 handeln.

Die Aluminiumfolie 22 wird zunächst einer Beschichtungsvorrichtung 24 zugeführt, in der die Folienoberseite und die Folienunterseite mit einem Lithium-haltigen Elektrodenmaterial beschichtet werden, beispielsweise durch Schlitzdüsen-Beschichtung. Die auf die Aluminiumfolie aufgetragene Beschichtung 26 kann eine Schichtdicke von bis zu 150 μm aufweisen und damit ein Vielfaches der Dicke der Aluminiumfolie 22.

Die beschichtete Folie 22 wird dann einer Trocknungsvorrichtung 28 zugeführt, bei der die Folie zunächst in einem Schwebetrockner 30 getrocknet und anschließend in einer Kühlstrecke 32, zum Beispiel mit Kühlwalzen 34, wieder abgekühlt wird. Typischerweise erfolgt eine Trocknung im Schwebetrockner für 2 Minuten bei ca. 150 °C. Nach dem Abkühlen wird die Aluminiumfolie zu einem Coil 36 aufgewickelt.

Aufgrund der großen Auftragsmenge des Elektrodenmaterials auf die Aluminiumfolie ist eine hohe Festigkeit der Aluminiumfolie wünschenswert, damit diese insbesondere im Schwebetrockner 30 nicht reißt. Zudem soll die Aluminiumfolie eine ausreichende Thermostabilität aufweisen, damit die erforderlichen Festigkeiten auch noch nach der Trocknungsbehandlung, d.h. nach 2 min. bei 150°C vorliegen.

In einem zweiten Verfahrensabschnitt wird die beschichtete Aluminiumfolie 22 wieder von dem Coil 36 abgewickelt und durch eine Kalandereinrichtung 38 geführt, in der die beschichtete Aluminiumfolie 22 zwischen Kalanderrollen 40 gepresst wird, um eine vorgegebene gleichmäßige Dicke der Beschichtung 26 zu erhalten.

Anschließend wird die beschichtete Folie in einer Spaltvorrichtung 42 in schmalere Bänder 44 längsgeteilt und zu Coils 46 aufgewickelt. Die auf diese Weise hergestellten Bänder beschichteter Aluminiumfolie werden in folgenden, nicht dargestellten Schritten auf die gewünschte Geometrie geschnitten bzw. gestanzt und weiter zu Lithium-Ionen-Akkumulatoren verarbeitet, indem sie im Wechsel mit Anodenschichten und jeweils dazwischen angeordneten Separatorschichten übereinandergestapelt werden. Dies kann zur Herstellung von Lithium-Ionen-Akkumulatoren in Flachbauweise durch sukzessives Übereinanderstapeln der einzelnen Schichten erfolgen oder zur Herstellung von Lithium-Ionen-Akkumulatoren in Zylinderbauweise durch Aufwickeln eines Stapels aus je einer Kathoden- und Anodenschicht mit Separatorschichten.

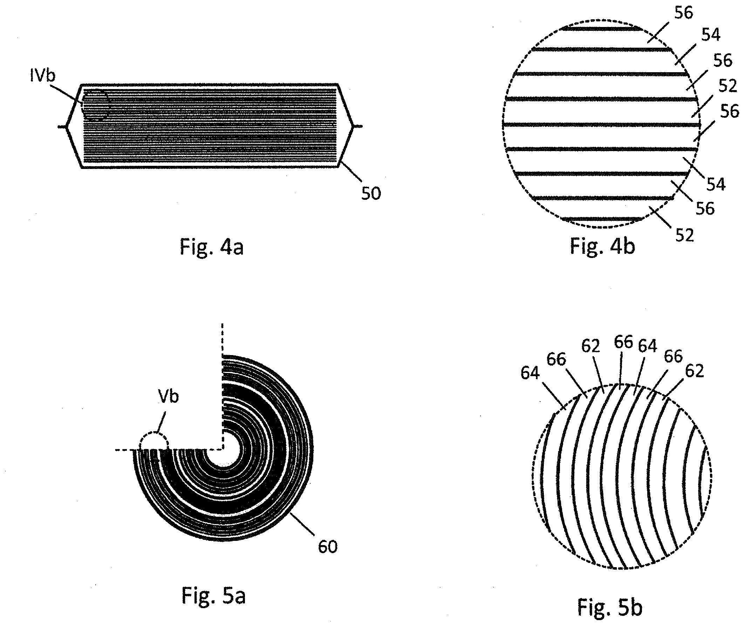

Die Fig. 4a-b zeigen schematisch den Schichtenaufbau eines Lithium-Ionen-Akkumulators 50 in Flachbauweise in Schnittdarstellung, wobei Fig. 4b ein vergrößertes Detail aus Figur 4a zeigt. Der Akkumulator 50 weist einen Stapel aus Kathodenlagen 52, Anodenlagen 54 und jeweils dazwischen angeordneten Separatorlagen 56 auf. Die Kathodenlagen 52 sind aus dem beschichteten Aluminiumband 44 aus Fig. 3 hergestellt.

Die Fig. 5a-b zeigen schematisch den Schichtenaufbau eines Lithium-Ionen-Akkumulators 60 in Zylinderbauweise in Schnittdarstellung, wobei Fig. 5b ein vergrößertes Detail aus Figur 5a zeigt. Zur Herstellung des Akkumulators 60 wurde ein Stapel aus einer Kathodenlage 62, einer Anodenlage 64 und zwei Separatorlagen 66 zu einem Zylinder aufgewickelt, so dass beim fertig hergestellten Akkumulator 60 eine Vielzahl dieser Lagen abwechselnd übereinander angeordnet sind.

Insbesondere beim Aufwickeln der einzelnen Lagen werden diese mechanisch stark beansprucht, so dass eine hohe Festigkeit der für die Kathodenlage eingesetzten Aluminiumfolie wünschenswert ist. In der Vergangenheit kam es bei der Verwendung niedrigfester Aluminiumfolien aus 1050-Legierungen beim Aufwickeln häufig zu Beschädigungen der Folien, die zu einer Unterbrechung des Produktionsprozesses oder zu einem vorzeitigen Versagen des hergestellten Akkumulators führten.

Durch die Verwendung der vorliegend beschriebenen Aluminiumfolie mit höherer Festigkeit werden derartige Produktionsstörungen bzw. ein vorzeitiges Versagen der Akkumulatoren im Betrieb verhindert.

Es wurden Versuche durchgeführt, die die Vorteile der beschriebenen Legierung und des beschriebenen Herstellungsverfahrens zeigen.

Zu diesem Zweck wurden Walzbarren mit 45mm Dicke aus den in Tabelle 2 genannten Legierungen A und B gegossen, wobei A ein erfindungsgemäßes Ausführungsbeispiel der Legierung und B ein Vergleichsbeispiel darstellt.

Tabelle 2 (alle Angaben in Gew.-%)

|  | Si | Fe | Cu | Mn | Zn | Ti | Mg | Pb | B | sonst | Al |
|---|---|---|---|---|---|---|---|---|---|---|---|
| A | 0,11 | 0,20 | 0,05 | 0,02 | 0,01 | 0,02 | 0,02 | 0,001 | 0,001 | <0,001 | Rest |
| B | 0,04 | 0,08 | 0,00 | 0,00 | 0,01 | 0,02 | 0,00 | 0,001 | <0,001 | <0,001 | Rest |

Die Walzbarren wurden jeweils für 3 h bei 600-610°C homogenisiert und anschließend in einem reversierenden Warmwalzgerüst zu einem Warmband mit einer Warmbanddicke von 4,5 mm und einer Warmbandtemperatur von ca. 330 °C gewalzt.

Das Warmband aus Legierung A wurde dann mit den in Tabelle 3 aufgeführten Parametern in insgesamt neun Kaltwalzstichen auf eine Enddicke von 15 $\mu$m kaltgewalzt (im Folgenden: Band A).

Tabelle 3

| Kaltwalzstich-Nr. | 1 | 2 | 3 | 4 | 5 | 6 | 7 | 8 | 9 |
|---|---|---|---|---|---|---|---|---|---|
| Ausgangsdicke [mm] | 4,5 | 2,0 | 1,0 | 0,55 | 0,35 | 0,21 | 0,105 | 0,057 | 0,023 |
| Stichenddicke [mm] | 2,0 | 1,0 | 0,55 | 0,35 | 0,21 | 0,105 | 0,057 | 0,023 | 0,015 |
| Abwalzgrad [%] | 56 | 50 | 45 | 36 | 40 | 50 | 46 | 60 | 32 |
| Lagern für 24h bei RT vor dem Kaltwalzstich | Nein | Nein | Nein | Nein | Nein | Nein | Ja | Ja | Ja |

Ab einer Ausgangsdicke von 0,105 mm wurde das Band zwischen den einzelnen Kaltwalzstichen für jeweils 24 h bei Raumtemperatur gelagert, d.h. erstmals zwischen den Kaltwalzstichen 6 und 7. Das Kaltwalzen wurde ohne Zwischenglühungen durchgeführt.

Das Warmband aus Legierung B wurde in entsprechender Weise zu einem Kaltband gewalzt, mit dem letzten Kaltwalzstich allerdings auf eine Enddicke von 20 $\mu$m (im Folgenden: Band B).

Von beiden Bändern A und B wurden an Enddicke (15 $\mu$m bei A, 20 $\mu$m bei B) im walzharten Zustand jeweils Proben von 100 mm Länge und 15 mm Breite entnommen, und zwar beim Band A einmal in und einmal quer zur Walzrichtung und beim Band B in Walzrichtung. Einige Proben von Band A wurden zudem einer Wärmebehandlung unterzogen, und zwar für 2 min. bei 150°C, was den typischen Trocknungsbedingungen nach dem Auftrag von Elektrodenmaterial im Herstellungsprozess für Lithium-Ionen-Akkumulatoren entspricht.

An allen Proben wurden Zugversuche nach DIN 50154:1980-12 durchgeführt. Die Ergebnisse sind in Tabelle 4 zusammengefasst (Band A: Dicke 15$\mu$m, Band B: Dicke 20$\mu$m).

Tabelle 4

| Versuch | Rm [MPa] | Rp0,2 [MPa] | A100 [%] |
|---|---|---|---|
| Band A (in Walzrichtung) | 281 | 243 | 2,7 |
| Band A (quer zur Walzrichtung) | 280 | 228 | 3,5 |
| Band A (in Walzrichtung, nach Wärmebehandlung) | 275 | 208 | 2,2 |
| Band B (in Walzrichtung) | 174 | 139,3 | 3,23 |

Die Versuche zeigen, dass sich mit der beschriebenen Legierung und mit dem beschriebenen Verfahren tatsächlich niedriglegierte Aluminiumfolien mit hoher Festigkeit erreichen lassen. Insbesondere übersteigen die beim Band A erreichten Werte für Rm und Rp0,2 deutlich die beim Band B aus der Vergleichslegierung erreichten Werte. Weiterhin zeigt das Band A insbesondere hohe Festigkeiten sowohl in als auch quer zur Walzrichtung. Dadurch lässt sich das Band unabhängiger von der Walzrichtung und damit flexibler weiterverarbeiten.

Auch nach der Wärmebehandlung von 2 min. bei 150°C weist das Band A gute Festigkeitswerte auf. Damit weist das Band A auch nach einem Trocknungsschritt (z.B. in der Trocknungsvorrichtung 28 in Fig. 3) noch eine gute Festigkeit auf, so dass sich das Aluminiumband weiter gut prozessieren lässt und längere Lebensdauern der daraus hergestellten Lithium-Ionen-Akkumulatoren ermöglicht. Umgekehrt ermöglichen die höheren Festigkeitswerte auch eine Reduzierung der Enddicke des Aluminiumbands, ohne dass die Festigkeitswerte zu stark absinken, so dass sich bei der Herstellung der Lithium-Ionen-Akkumulatoren Material, Gewicht und Raum sparen lässt.

Proben von Bändern einer Dicke von 15 $\mu$m und 20 $\mu$m wurde die Phasenanzahl der Phasen mit einer Durchmesserlänge von 0,1- 1,0 $\mu$m und einer Durchmesserlänge von > 1 $\mu$m bestimmt.

Die Legierungszusammensetzung der Proben ist wie folgt:

Tabelle 5 (alle Angaben in Gew.-%)

| Si | Fe | Cu | Mn | Mg | Zn | Ti | sonst | Al |
|---|---|---|---|---|---|---|---|---|
| 0,1100 | 0,2000 | 0,0500 | 0,0200 | 0,0200 | 0,0100 | 0,0200 | <0,005 | Rest |

Die Proben wurden mit einer Oxid-Poliersuspension mechanisch präpariert. Die Bestimmung der maximalen Durchmesserlängen erfolgte mit einem

Feldemissionsrasterelektronenmikroskop (Zeiss Merlin) mit B2D4-Detektor (pneumatisch betriebener Detektor für Feldemissions-Rastereletronenmikroskop) bei einer Vergrößerung von 1000x und einer Beschleunigungsspannung von 10 kV.

Die Ergebnisse für Partikel mit einer maximalen Durchmesserlänge von 0,1-1.0 $\mu$m sind in Tabelle 6 dargestellt:

Tabelle 6

| Dicke | Phasenanzahl (max. Durchmesserlänge 0,1-1.0 gm)/mm$^2$ |
|---|---|
| 15 $\mu$m | $4 \times 10^3$ |
| 12 $\mu$m | $3 \times 10^3$ |

Die Ergebnisse für Partikel mit einer Durchmesserlänge > 1.0 $\mu$m sind in Tabelle 7 dargestellt:

Tabelle 7

| Dicke | Phasenanzahl (Durchmesserlänge >1.0 $\mu$m)/mm$^2$ |
|---|---|
| 15 $\mu$m | $4 \times 10^3$ |
| 12 $\mu$m | $4 \times 10^3$ |

Dies zeigt, dass die Batterieelektrodenfolien der Erfindung sowohl eine hohe Festigkeit als auch eine feine Partikelverteilung aufweisen.

**Patentansprüche**

1. Batterieelektrodenfolie umfassend eine Aluminiumlegierung,

   wobei die Aluminiumlegierung die folgende Zusammensetzung in Gew.-% aufweist:

   Si:     0,07-0,12 Gew.-%,
   Fe:     0,18 - 0,24 Gew.-%,
   Cu:     0,03 - 0,08 Gew.-%,
   Mn:     0,015 - 0,025 Gew.-%,

(fortgesetzt)

| | |
|---|---|
| Zn: | ≤ 0,01 Gew.-% |
| Ti: | 0,015 - 0,025 Gew.-%, |

wobei die Aluminiumlegierung Verunreinigungen jeweils bis maximal 0,01 %, insgesamt bis maximal 0,03 % aufweisen kann,

wobei die verbleibenden Gew.-% Aluminium sind,

wobei der Anteil an Aluminium jedoch mindestens 99,5 Gew.-% sein muss;

wobei die Batterieelektrodenfolie intermetallische Phasen einer Durchmesserlänge von 0,1 bis 1,0 $\mu$m mit einer Dichte ≤ 9500 Partikeln/mm$^2$ aufweist, und

wobei die Batterieelektrodenfolie eine Dicke von 8 bis 20 $\mu$m, vorzugsweise von 12 $\mu$m aufweist.

2. Batterieelektrodenfolie gemäß Anspruch 1, wobei die Batterieelektrodenfolie intermetallische Phasen einer Durchmesserlänge von 0,1 bis 1,0 $\mu$m mit einer Dichte ≤ 7000 Partikeln/mm$^2$ aufweist, und/oder wobei die Batterieelektrodenfolie eine elektrische Mindestleitfähigkeit von 56 % IACS aufweist.

3. Batterieelektrodenfolie gemäß einem der vorhergehenden Ansprüche, wobei die Batterieelektrodenfolie eine Zugfestigkeit (in Walzrichtung und quer zur Walzrichtung) Rm > 250 MPa aufweist.

4. Batterieelektrodenfolie gemäß einem der vorhergehenden Ansprüche, wobei die Batterieelektrodenfolie eine Oberflächenrauhigkeit Ra von 0,07 bis 0,22 $\mu$m auf beiden Seiten aufweist, insbesondere wobei der Unterschied der Oberflächenrauhigkeit Ra auf beiden Seiten der Batterieelektrodenfolie maximal 0,03 $\mu$m beträgt.

5. Batterieelektrodenfolie gemäß einem der vorhergehenden Ansprüche, wobei die Batterieelektrodenfolie eine Kohlenstoffbelegung von < 5 mg/m$^2$ aufweist.

6. Batterieelektrodenfolie gemäß einem der vorhergehenden Ansprüche, wobei die Oberflächenspannung der Batterieelektrodenfolie > 30 dyn/cm beträgt, insbesondere wobei die Oberflächenspannung der Batterieelektrodenfolie > 32 dyn/cm beträgt.

7. Batterieelektrodenfolie gemäß einem der vorhergehenden Ansprüche, wobei die Batterieelektrodenfolie, insbesondere bei einer Dicke von 12 $\mu$m, folgende mechanische Eigenschaften aufweist:

| | |
|---|---|
| Rm (in Walzrichtung): | ≥ 250 MPa, |
| Rm (quer zur Walzrichtung): | ≥ 250 MPa, |
| Rp0.2 (in Walzrichtung): | ≥ 200 MPa, |
| Rp0.2 (quer zur Walzrichtung): | ≥ 200 MPa, |
| A100 (in Walzrichtung): | ≥ 2,0%, |
| A100 (quer zur Walzrichtung) | ≥ 2,0%. |

8. Batterieelektrodenfolie gemäß einem der vorhergehenden Ansprüche, **dadurch gekennzeichnet, dass** das Fe/Si-Verhältnis im Bereich von 1,5 bis 3,5 liegt und/oder **dadurch gekennzeichnet, dass** das Cu/Ti-Verhältnis im Bereich von 2 bis 5 liegt.

9. Verfahren zur Herstellung einer Batterieelektrodenfolie (12, 22),

- bei dem ein Aluminiumwarmband (8) mit einer Warmbanddicke von mindestens 2,5 mm aus einer Aluminiumlegierung wie in den Ansprüchen 1, 7 und 8 beschrieben, bereitgestellt wird und
- bei dem das Aluminiumwarmband (8) in mehreren Kaltwalzstichen (K1, Kx, Kx+1, Ky, Ky+1, Kn) auf eine Enddicke von 8 bis 20 $\mu$m kaltgewalzt wird,
- wobei das Kaltwalzen ab einer Ausgangsdicke von mindestens 1 mm ohne Zwischenglühen erfolgt, und
- wobei auf eine Enddicke von 8 bis höchstens 20 $\mu$m, vorzugsweise von 12 $\mu$m kaltgewalzt wird, insbesondere

wobei das Kaltwalzen von Warmbanddicke auf Enddicke ohne Zwischenglühen erfolgt.

10. Verfahren gemäß Anspruch 9, **dadurch gekennzeichnet, dass** der Abwalzgrad pro Kaltwalzstich ab einer Ausgangsdicke von zumindest 0,55 mm, vorzugsweise von zumindest 1,5 mm, höchstens 60 % beträgt.

11. Verfahren gemäß einem der Ansprüche 9 bis 10, **dadurch gekennzeichnet, dass** das Aluminiumband ab einer Dicke von zumindest 0,1 mm, vorzugsweise von zumindest 0,2 mm, zwischen zwei Kaltwalzstichen abgekühlt wird, insbesondere auf eine Temperatur von höchstens 50 °C.

12. Verfahren gemäß einem der Ansprüche 9 bis 11, **dadurch gekennzeichnet, dass** das Aluminiumband bis auf Enddicke einlagig kaltgewalzt wird.

13. Batterieelektrodenfolie, insbesondere gemäß einem der Ansprüche 1 bis 8, hergestellt mit einem Verfahren gemäß einem der Ansprüche 9 bis 12.

14. Verwendung einer Batterieelektrodenfolie gemäß einem der Ansprüche 1 bis 8 und 13 als Stromableiterfolie, insbesondere zur Herstellung eines Akkumulators, insbesondere eines Lithium-Ionen-Akkumulators.

15. Akkumulator, insbesondere Lithium-Ionen-Akkumulator, mit einem Stromableiter aus einer Batterieelektrodenfolie gemäß einem der Ansprüche 1 bis 8 und 13.

**Claims**

1. A battery electrode foil comprising an aluminium alloy,

    wherein the aluminium alloy has the following composition in wt.-%:

    | | |
    |---|---|
    | Si: | 0.07 - 0.12 wt.-%, |
    | Fe: | 0.18 - 0.24 wt.-%, |
    | Cu: | 0.03 - 0.08 wt.-%, |
    | Mn: | 0.015 - 0.025 wt.-%, |
    | Zn: | $\leq$ 0,01 wt.-%, |
    | Ti: | 0.015 - 0.025 wt.-%, |

    wherein the aluminium alloy can comprise impurities up to a maximum of 0.01 % in each case, up to a maximum of 0.03 % in total,
    wherein the remaining wt.-% are aluminium,
    but the aluminium content must be at least 99.5 wt.-%;
    wherein the battery electrode foil has intermetallic phases of a diameter length of from 0.1 to 1.0 $\mu$m with a density $\leq$ 9500 particles/mm$^2$, and
    wherein the battery electrode foil has a thickness of 8 to 20 $\mu$m, preferably 12 $\mu$m.

2. The battery electrode foil according to claim 1, wherein the battery electrode foil has intermetallic phases of a diameter length of from 0.1 to 1.0 $\mu$m with a density $\leq$ 7000 particles/mm$^2$, and/or wherein the battery electrode foil has a minimum electrical conductivity of 56 % IACS.

3. The battery electrode foil according to any one of the preceding claims, wherein the battery electrode foil has a tensile strength (in the direction of rolling and transverse to the direction of rolling) Rm > 250 MPa.

4. The battery electrode foil according to any one of the preceding claims, wherein the battery electrode foil has a surface roughness Ra of from 0.07 to 0.22 $\mu$m on both sides, in particular wherein the difference in surface roughness Ra on both sides of the battery electrode foil is at most 0.03 $\mu$m.

5. The battery electrode foil according to any one of the preceding claims, wherein the battery electrode foil has a carbon coverage of < 5 mg/m$^2$.

6. The battery electrode foil according to any one of the preceding claims, wherein the surface tension of the battery electrode foil is > 30 dyn/cm, in particular wherein the surface tension of the battery electrode foil is > 32 dyn/cm.

7. The battery electrode foil according to any one of the preceding claims, wherein the battery electrode foil, in particular at a thickness of 12 μm, has the following mechanical properties:

| | |
|---|---|
| Rm (in direction of rolling): | ≥ 250 MPa, |
| Rm (transverse to direction of rolling): | ≥ 250 MPa, |
| Rp0.2 (in direction of rolling): | ≥ 200 MPa, |
| Rp0.2 (transverse to direction of rolling): | ≥ 200 MPa, |
| A100 (in direction of rolling): | ≥ 2,0 %, |
| A100 (transverse to the direction of rolling): | ≥ 2.0 %. |

8. The battery electrode foil according to any one of the preceding claims, **characterized in that** the Fe/Si ratio is in the range of from 1.5 to 3.5, and/or **characterized in that** the Cu/Ti ratio is in the range of from 2 to 5.

9. A method of manufacturing a battery electrode foil (12, 22),

- wherein an aluminium hot-rolled strip (8) with a hot-rolled thickness of at least 2.5 mm is provided from an aluminium alloy as described in claims 1, 7 and 8, and
- in which the aluminium hot-rolled strip (8) is cold rolled in several cold rolling passes (K1, Kx, Kx+1, Ky, Ky+1, Kn) to a final thickness of from 8 to 20 μm,
- wherein cold rolling is carried out without intermediate annealing from an initial thickness of at least 1 mm, and
- wherein cold rolling is carried out to a final thickness of from 8 to at most 20 μm, preferably 12 μm, in particular

wherein the cold rolling from hot-rolled strip thickness to final thickness is carried out without intermediate annealing.

10. The method according to claim 9, **characterized in that** the degree of rolling per cold rolling pass is at most 60 % from an initial thickness of at least 0.55 mm, preferably at least 1.5 mm.

11. The method according to any one of claims 9 to 10, **characterized in that** the aluminium strip, starting from a thickness of at least 0.1 mm, preferably of at least 0.2 mm, is cooled between two cold rolling passes, in particular to a temperature of at most 50 °C.

12. The method according to any one of claims 9 to 11, **characterized in that** the aluminium strip is cold rolled to final thickness in a single layer.

13. Battery electrode foil, in particular according to any one of claims 1 to 8, produced by a method according to any one of claims 9 to 12.

14. Use of a battery electrode foil according to any one of claims 1 to 8 and 13 as a current collector foil, in particular for manufacture of an accumulator, in particular a lithium-ion accumulator.

15. An accumulator, in particular a lithium-ion accumulator, comprising a current collector made of a battery electrode foil according to any one of claims 1 to 8 and 13.

**Revendications**

1. Feuille d'électrode de batterie, comprenant un alliage d'aluminium,

ledit alliage d'aluminium ayant la composition suivante, en % en poids :

| | |
|---|---|
| Si : | 0,07 à 0,12 % en poids, |
| Fe : | 0,18 à 0,24 % en poids, |
| Cu : | 0,03 à 0,08 % en poids, |
| Mn : | 0,015 à 0,025 % en poids, |
| Zn : | ≤ 0,01 % en poids |

(suite)

Ti :　　　　0,015 à 0,025 % en poids,

ledit alliage d'aluminium pouvant comporter des impuretés dont chacune peut atteindre 0,01 % au maximum, leur totalité pouvant atteindre 0,03 %,

le pourcentage en poids restant étant de l'aluminium,

la proportion d'aluminium devant toutefois être supérieure ou égale à 99,5 % en poids ;

ladite feuille d'électrode de batterie comportant des phases intermétalliques dont la longueur diamétrale est comprise entre 0,1 et 1,0 $\mu$m et dont la densité est $\leq$ 9 500 particules / mm$^2$, et

ladite feuille d'électrode de batterie présentant une épaisseur qui est comprise entre 8 et 20 $\mu$m, de préférence égale à 12 $\mu$m.

2. Feuille d'électrode de batterie selon la revendication 1, ladite feuille d'électrode de batterie comportant des phases intermétalliques dont la longueur diamétrale est comprise entre 0,1 et 1,0 $\mu$m et dont la densité est $\leq$ 7 000 particules / mm$^2$, et/ou

ladite feuille d'électrode de batterie présentant une conductivité électrique minimum correspondant à 56 % IACS.

3. Feuille d'électrode de batterie selon l'une des revendications précédentes, ladite feuille d'électrode de batterie ayant une résistance à la traction (selon la direction le laminage et transversalement à la direction de laminage) Rm > 250 MPa.

4. Feuille d'électrode de batterie selon l'une des revendications précédentes, ladite feuille d'électrode de batterie présentant, sur ses deux faces, une rugosité de surface Ra comprise entre 0,07 et 0,22 $\mu$m,

la différence entre les rugosités de surface Ra des deux faces de ladite feuille d'électrode de batterie étant notamment inférieure ou égale à 0,03 $\mu$m.

5. Feuille d'électrode de batterie selon l'une des revendications précédentes, la présence de carbone sur ladite feuille d'électrode de batterie correspondant à < 5 mg/m$^2$.

6. Feuille d'électrode de batterie selon l'une des revendications précédentes, la tension superficielle de ladite feuille d'électrode de batterie étant > 30 dyn/cm, la tension superficielle de ladite feuille d'électrode de batterie étant notamment > 32 dyn/cm.

7. Feuille d'électrode de batterie selon l'une des revendications précédentes, ladite feuille d'électrode de batterie présentant, notamment lorsque son épaisseur est de 12 $\mu$m, les propriétés mécaniques suivantes :

Rm (selon la direction de laminage) :　　　　　　　　　　$\geq$ 250 MPa,
Rm (transversalement à la direction de laminage) :　　　　$\geq$ 250 MPa,
Rp0,2 (selon la direction de laminage) :　　　　　　　　　$\geq$ 200 MPa,
Rp0,2 (transversalement à La direction de laminage) :　　$\geq$ 200 MPa,
A100 (selon la direction de laminage) :　　　　　　　　　$\geq$ 2,0 %,
A100 (transversalement à la direction de laminage) :　　$\geq$ 2,0 %.

8. Feuille d'électrode de batterie selon l'une des revendications précédentes, **caractérisée en ce que** le rapport Fe/Si est compris entre 1,5 et 3,5 et/ou **caractérisée en ce que** le rapport Cu/Ti est compris entre 2 et 5.

9. Procédé de fabrication d'une feuille d'électrode de batterie (12, 22),

- comportant la mise à disposition d'une bande d'aluminium laminée à chaud (8) dont l'épaisseur de bande laminée à chaud est supérieure ou égale à 2,5 mm, constituée d'un alliage d'aluminium selon la description dans les revendications 1, 7 et 8, et

- comportant le laminage à froid de la bande d'aluminium laminée à chaud (8), en plusieurs passes de laminage à froid (K1, Kx, Kx+1, Ky, Ky+1, Kn), jusqu'à ce qu'elle atteigne une épaisseur finale comprise entre 8 et 20 $\mu$m,

- ledit laminage à froid étant réalisé, lorsque l'épaisseur de départ est supérieure ou égale à 1 mm, sans recuit intermédiaire, et

- ledit laminage à froid étant réalisé de manière à atteindre une épaisseur finale comprise entre 8 et 20 μm, de préférence égale à 12 μm,

ledit laminage à froid permettant de passer, depuis l'épaisseur de bande laminée à chaud, à l'épaisseur finale sans effectuer de recuit intermédiaire.

10. Procédé selon a revendication 9, **caractérisé en ce que** le taux de réduction par passe de laminage à froid est, à partir d'une épaisseur de départ supérieure ou égale à 0,55 mm, de préférence supérieure ou égale à 1,5 mm, inférieur ou égal à 60 %.

11. Procédé selon au moins une des revendications 9 à 10, caractérisé en ce ladite bande d'aluminium subit, dès lors que son épaisseur est supérieure ou égale à 0,1 mm, de préférence supérieure ou égale à 0,2 mm, un refroidissement entre deux passes de laminage à froid, notamment à une température inférieure ou égale à 50 °C.

12. Procédé selon l'une des revendications 9 à 11, **caractérisé en ce que** ladite bande d'aluminium est laminée à froid, sous forme d'une couche unique, jusqu'à atteindre son épaisseur finale.

13. Feuille d'électrode de batterie, notamment selon l'une des revendications 1 à 8, fabriquée au moyen d'un procédé selon l'une des revendications 9 à 12.

14. Utilisation d'une feuille d'électrode de batterie selon l'une des revendications 1 à 8 et 13, en tant que feuille collectrice de courant, notamment pour fabriquer un accumulateur, plus particulièrement un accumulateur lithium-ion.

15. Accumulateur, plus particulièrement accumulateur lithium-ion, pourvu d'un collecteur de courant lequel est constitué d'une feuille d'électrode de batterie selon l'une des revendications 1 à 8 et 13.

Fig. 1

Fig. 2

Fig. 3

Fig. 4b

Fig. 5b

Fig. 4a

Fig. 5a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2857535 A
- EP 2738849 A
- EP 2738850 A
- CN 106929713 A
- CN 103436746 A
- CN 104611616 B
- CN 105063520 A
- CN 107099701 A